Europäisches Patentamt

European Patent Office

Office européen des brevets

(19)

(11) Veröffentlichungsnummer: **0 195 845**
**B1**

(12) **EUROPÄISCHE PATENTSCHRIFT**

(45) Veröffentlichungstag der Patentschrift:
27.12.89

(51) Int. Cl.⁴: **G 01 M 1/32**

(21) Anmeldenummer: 85112577.3

(22) Anmeldetag: 04.10.85

(54) Verfahren zum fortlaufenden Ausgleich einer Unwucht eines Rotors, insbesondere einer Schleifscheibe und Schaltungsanordnung hierfür.

(30) Priorität: 26.03.85 DE 3510950

(43) Veröffentlichungstag der Anmeldung:
01.10.86 Patentblatt 86/40

(45) Bekanntmachung des Hinweises auf die Patenterteilung:
27.12.89 Patentblatt 89/52

(84) Benannte Vertragsstaaten:
AT BE CH FR GB IT LI NL

(56) Entgegenhaltungen:
EP-A-0 052 015
US-A-3 646 601

(73) Patentinhaber: HOFMANN WERKSTATT- TECHNIK GMBH, Werner- von- Siemens- Strasse 2, D-6102 Pfungstadt (DE)

(72) Erfinder: Menigat, Roland, Brunnenstrasse 11, D-6237 Liederbach (DE)
Erfinder: Gruppenbacher, Klaus, Holzhäuserweg 17, D-6110 Dieburg (DE)

(74) Vertreter: Nöth, Heinz, Dipl.- Phys., Patentanwälte Pfenning, Meinig & Partner Mozartstrasse 17, D-8000 München 2 (DE)

## Beschreibung

Die Erfindung betrifft ein Verfahren nach dem Oberbegriff des Anspruchs 1 und eine Schaltungsanordnung nach dem Oberbegriff des Anspruchs 8. Ein derartiges Verfahren ist aus der DE-OS 2 357 629 bekannt. Bei der Anwendung von Schleifscheiben oder ähnlichen Rotoren zur Bearbeitung von Werkstücken, ist es aufgrund der Abnutzung der Arbeitsfläche am Umfang des Rotors, insbesondere der Schleifscheibe erforderlich, daß zur Erzielung einer Materialbearbeitung hoher Qualität der Rotor während seines Umlaufs ausgewuchtet wird. Dies erfordert die ständige Messung auftretender Unwuchten und die Beaufschlagung der mit dem Rotor als Rotationseinheit umlaufenden, in unterschiedlichen Winkellagen angeordneten Ausgleichskammern mit entsprechenden Mengen an Ausgleichsflüssigkeit.

Das vom Meßgeber abgegebene Unwuchtmeßsignal ist vom Maschinenverhalten beeinflußt, das nicht vorhersehbar ist und sich ständig ändert. Dies liegt, wie schon erwähnt, daran, daß die Masse des Rotors bei der Materialbearbeitung sich ständig ändert. Auch extern hervorgerufene Störschwingungen von mitlaufenden Rotoren, insbesondere in der Materialbearbeitungsmaschine, z. B. Schleifmaschine, sowie aus der Lagerung resultierende Störschwingungen, können zu Schwankungen des Unwuchtmeßsignals führen. Einen weiteren Anteil an den Schwankungen des Unwuchtmeßsignals haben auch kurzfristige Störschwingungen, welche beim Einspritzen der Ausgleichsflüssigkeit in die Ausgleichskammern entstehen. Dies kann so weit führen, daß diese Störschwingungen nachfolgende Ausgleichsvorgänge für nicht vorhandene Unwuchten auslösen, die so weit führen können, daß alle Ausgleichskammern mit Ausgleichsflüssigkeit angefüllt sind und dann ein vernünftiger Ausgleichsvorgang aufgrund der Erschöpfung der Kapazität des Auswuchtvorgangs nicht mehr möglich ist. Ferner können Störungen des Unwuchtmeßsignals hervorgerufen werden beim Durchlaufen des kritischen Drehzahlbereichs, was bei den in Rede stehenden Rotoren, insbesondere Schleifscheiben, in der Praxis fast immer der Fall ist. Dies liegt daran, daß, wie schon in der älteren deutschen Patentanmeldung P 35 037 24.5 ausgeführt wird, eine konstante Geschwindigkeit der zur Materialbearbeitung dienenden Umfangsfläche des Rotors, d. h. eine konstante Schnittgeschwindigkeit, gefordert wird. Aufgrund der Abnutzung der Arbeitsfläche am Umfang des Rotors ist es deshalb erforderlich, die Drehzahl des Rotors ständig zu erhöhen. In der Praxis kann es erforderlich sein, daß Drehzahlbereiche von 750 - 2000 Umdrehungen pro Minute durchfahren werden. Es läßt sich dann nicht mehr vermeiden, daß wegen der zwangsläufig vorgegebenen Massen von Lager, Spindel und Rotor, z. B. Spindelstock und Schleifscheibe, der Rotor im unterkritischen und überkritischen Bereich arbeitet und beim Übergang vom unterkritischen in den überkritischen Bereich den kritischen Drehzahlbereich durchläuft. Dabei erfolgt eine Phasenverschiebung zwischen der Unwuchtwinkellage und der zugehörigen Schwingbewegung von 0° nach 180°. Dies kann zu Schwankungen bzw. Störungen des Auswuchtvorganges führen.

Aufgabe der Erfindung ist es daher, ein Verfahren und eine Schaltungsanordnung der eingangs genannten Art zu schaffen, bei denen unerwünschte Einflüsse von Störungen bzw. Schwankungen des Unwuchtmeßsignals auf den Ausgleichsvorgang bzw. die Ausgleichsvorgänge beseitigt sind.

Diese Aufgabe wird erfindungsgemäß durch die im Kennzeichen des Anspruchs 1 angegebenen Merkmale gelöst.

Die Unteransprüche kennzeichnen Weiterbildungen der Erfindung.

Durch die Erfindung wird ein Überregelungsverhalten bei den Ausgleichsvorgängen und den gleichzeitig durchgeführten Unwuchtmessungen vermieden und eine Beruhigung des Regelkreises erreicht. Dies wird dadurch ermöglicht, daß bei der Erfindung die Toleranz, innerhalb welcher zulässige Unwuchtwerteschwankungen zugelassen werden, aus den Schwankungen des Unwuchtmeßsignals, das kontinuierlich ermittelt wird, abgeleitet wird.

Das erfindungsgemäße Verfahren kommt bevorzugt zum Einsatz bei dem in der älteren Deutschen Patentanmeldung P 35 037 24.5 beschriebenen Verfahren nach Messung der Ausgangunwucht und vor dem Einleiten des Ausgleichvorgangs, d. h. vor dem Einbringen der Testmenge an Ausgleichsflüssigkeit.

Durch den Multiplikator, mit welchem der aus der Differenz von Maximal- und Minimalwert bzw. der aus dem Vergleich der Eingangs- und Ausgangswerte der Unwucht bei der phasenabhängigen Gleichrichtung gewonnene Störfaktor multipliziert wird, wird erreicht, daß die jeweils bestimmte Toleranz in Abhängigkeit von der gewünschten Genauigkeit etwas größere Spitzenwerte des Unwuchtmeßsignals zuläßt als sie dem innerhalb des bestimmten Zeitraums ermittelten Maximal- und Minimalwert entsprechen. Es wird hierbei in Abhängigkeit von den Störsignalen bzw. den Maschinenstörungen eine positive Tendenz der Auswuchtgüte erreicht. Der Maximal- und Minimalwert des Unwuchtmeßsignals kann innerhalb eines Zeitraums von weniger als 5 Sekunden, insbesondere von etwa 1 bis 2 Sekunden, ermittelt werden. Bei Anwendung der phasenabhängigen Gleichrichtung wird der Störfaktor aus mehreren Messungen ermittelt.

In Abhängigkeit von der Genauigkeit der zu erreichenden Auswuchtung wird für den Multiplikator, mit welchem die Differenz vom ermittelten Maximal- und Minimalwert multipliziert wird, ein Wert größer 1, bevorzugt zwischen 1 und 2, gewählt.

Anhand der beiliegenden Figuren wird die Erfindung noch näher erläutert. Es zeigt:

Fig. 1    ein Flußdiagramm als Ausführungsbeispiel für den Ablauf des erfindungsgemäßen Verfahrens und

Fig. 2 ein weiteres Ausführungsbeispiel in einem Blockschaltbild.

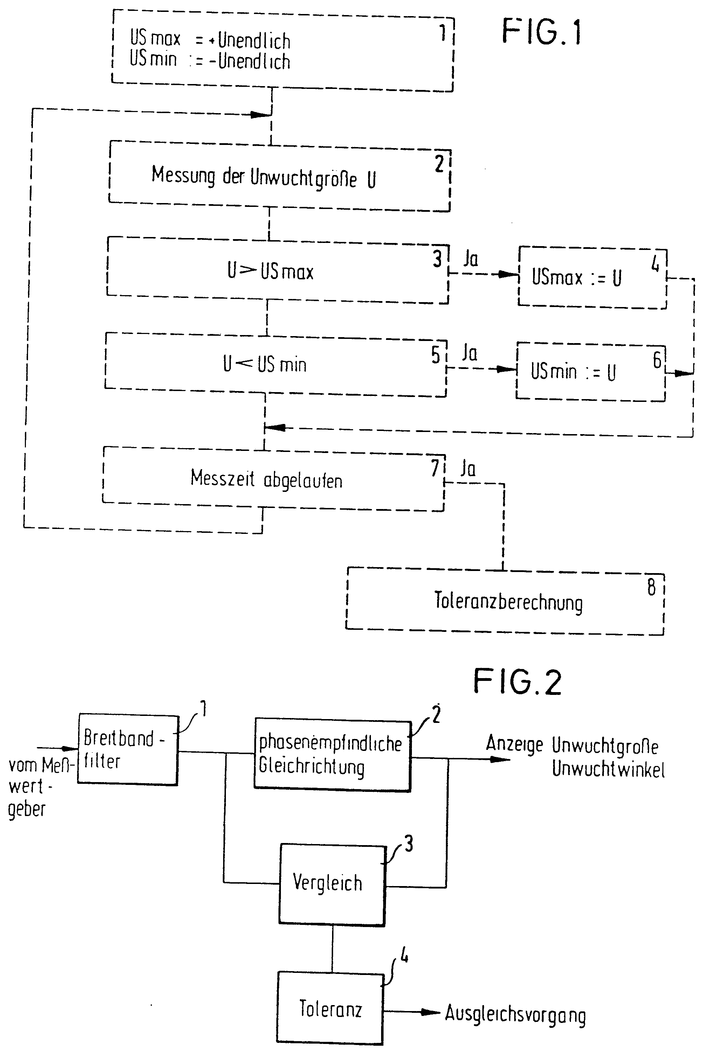

In dem Flußdiagramm der Fig. 1 bedeuten:

U die Unwuchtgröße des auszuwuchtenden Rotors;

USmax den Maximalwert des Unwuchtmeßsignals;

USmin den Minimalwert des Unwuchtmeßsignals.

Der Ablauf ist folgender:

1. Zu Beginn der Meßaufnahmne werden die Speicherstellen US max und US min durch Überschreiten mit Maximal- und Minimalwerten gelöscht.
2. Die momentane Unwuchtgröße U wird gemessen.
3. Die gemessene Unwuchtgröße wird mit dem abgelegten Maximalwert US max verglichen.
4. Ist die gemessene Unwuchtgröße größer als der bisherige Maximalwert US max, wird US max mit der gemessenen Unwuchtgröße überschrieben.
5. Wenn die gemessene Unwuchtgröße U kleiner als US max ist, wird sie mit dem Minimalwert US min verglichen.
6. Ist die gemessene Unwuchtgröße kleiner als der bisherige Minimalwert US min, wird US min mit der gemessenen Unwuchtgröße überschrieben.
7. Wenn die Meßzeit für die Maximal- und Minimalwerterfassung noch nicht abgelaufen ist, wiederholt sich der Vorgang der vorstehenden Schritte 2 bis 6.
8. Wenn die Meßzeit abgelaufen ist, wird die Toleranz T aus den nun vorhandenen Maximal-und Minimalwerten US max und US min nach der Formel

T = (US max - US min) x TM

ermittelt, wobei TM den Multiplikator darstellt. Die Toleranzgrößenberechnung ist damit abgeschlossen.

Venn das von den Meßwertgebern kommende Unwuchtmeßsignal durch phasenabhängige Gleichrichtung ausgewertet wird, wird der Störfaktor aus dem Vergleich der Werte des Unwuchtmeßsignals vor und nach der phasenabhängigen Gleichrichtung bestimmt. Bei der phasenabhängigen Gleichrichtung (DE-AS-1 108 475, Hofmann-Info Nr. 2 der Firma Gebr. Hofmann GmbH & Co. KG, D-6 102 Pfungstadt, Hofmann News Nr. 5 der Firma Gebr. Hofmann GmbH & Co. KG, D-6 102 Pfungstadt) wird die von den Meßwertaufnehmern kommende Unwuchtschwingung mit einer rotationsfrequenten rechteckförmigen Phasenbezugsspannung gleichgerichtet und anschließend über ein RC-Glied integriert. Hierbei werden zwei Gleichrichter eingesetzt, die in ihrer Wirkung um 90° phasenverschoben sind. Es werden dabei zwei Gleichspannungen gebildet, die das Unwuchtsignal nach Größe und Phasenlage beinhalten. Bei der phasenabhängigen Gleichrichtung werden alle Störschwingungen und geradzahligen Oberwel-len herausgefiltert. Die ungeradzahligen Oberwel-len werden mittels eines zwischen den Meßwertaufnehmern und der Schaltung für die phasenabhängige Gleichrichtung eingefügten Filters, das relativ breitbandig ist, unterdrückt. Dieses Filter kann als sogenanntes Trackingfilter (Auto-TrackingMeßverfahren in Hofmann News Nr. 5 der Firma Gebr. Hofmann GmbH & Co. KG, D-6 102 Pfungstadt) ausgebildet sein und wird mit der Drehzahl des Wuchtkörpers über den ganzen Drehzahlbereich hin nachgestimmt. Auf diese Weise werden die im Meßsignal enthaltenen Störsignale unterdrückt.

Aus der Fig. 2 ist zu ersehen, daß das vom Meßwertgeber kommende, die Störsignale noch enthaltende Unwuchtmeßsignal einem Breitbandfilter 1 zugeführt wird. Der Ausgangs des Breitbandfilters 1 ist an den Eingang einer Schaltung 2 zur phasenabhängigen Gleichrichtung, wie sie beispielsweise aus der DE-AS-1 108 475 bekannt ist und an einen Vergleicher 3 angeschlossen. Der Ausgang der Schaltung 2 ist mit einem weiteren Eingang des Vergleichers 3 verbunden. Das Ausgangssignal der Schaltung 2 wird außerdem weitergegeben an eine Speicher- und/oder Anzeigeeinrichtung für die Unwuchtgröße und Un-wuchtwinkellage. Durch die kombinierte Anord-nung des über den gesamten Drehzahlbereich des Wuchtkörpers kontinuierlich mitgeführten Breitbandfilters 1 und der phasenempfindlichen Gleichrichtung 2 werden neben der Auswertung der vom Meßgeber kommenden Unwuchtmeßsignale, wie schon erwähnt, auch die in diesen Signalen enthaltenen Störsignale unterdrückt. Die im Vergleicher 3 ermittelte Differenz zwischen den Eingangs- und Ausgangssignalen der Schaltung 2 für die phasenempfindliche Gleichrichtung stellt ein Maß für den Störanteil dar und wird als Störfaktor N mit dem in Abhängigkeit von zulässi-gen Schwankungen des Unwuchtmeßsignals be-stimmten Multiplikator TM in einem an den Ausgang des Vergleichers 3 angeschlossenen Multiplizierer 4 zur Bestimmung der Toleranz T gemäß der nachstehenden Gleichung multipli-ziert:

T = N x TM

Beim dargestellten bevorzugten Ausführungsbei-spiel ist der eine Eingang des Vergleichers 3 an den Eingang der Schaltung 2 angeschlossen. Es kann dieser Eingang des Vergleichers zur Bestimmung des Störfaktors N auch an den Eingang des insbesondere als Trackingfilter ausgebildeten Breitbandfilter 3 angeschlossen sein.

Bei dem im Zusammenhang mit der Fig. 1 beschriebenen Ausführungsbeispiel wird der Störanteil $N_n$ = (USmax-USmin) ermittelt und mit dem vorher ermittelten Störanteil $N_{n1}$ verglichen. Wenn eine Differenz zwischen den beiden Stör-anteilen $N_n$ und $N_{n-1}$ vorhanden ist, erfolgt eine

Multiplikation des Störanteils $N_n$ mit dem Multiplikator TM zur Neufestlegung der Toleranz T.

Bei dem Ausführungsbeispiel, welches mit Hilfe der in der Fig. 2 dargestellten Anordnung durchgeführt wird, erfolgt die Bestimmung des Störanteils $N_n$ durch den Vergleich der Unwuchtmeßsignale, welche an einer Stelle zwischen dem Meßwertgeber und der phasengesteuerten Gleichrichterschaltung 2, insbesondere am Eingang der phasengesteuerten Gleichrichterschaltung 2 vorhanden sind. Wenn zwischen den Störanteilen $N_n$ und den vorher bestimmten Störanteilen $N_{n-1}$ eine Differenz vorhanden ist, erfolgt eine Multiplikation des Störanteils $N_n$ mit dem Multiplikator TM zur Neufestlegung der Toleranz.

Diese beiden Verfahren können gleichzeitig oder alternativ zum Einsatz kommen, so daß die Toleranz T jeweils durch das eine oder das andere Verfahren neu festgelegt wird. Theoretisch kann also die Toleranz durch die beiden Ausführungsbeispiele sehr klein gemacht werden und dies kann unter Umständen zu einem Überregelverhalten führen. Um dies zu vermeiden, kann in bevorzugter Weise gleichzeitig ein Verfahren zum Einsatz gebracht werden, durch welches die Toleranzänderung nach unten hin begrenzt wird. Dabei wird von der Überlegung ausgegangen, daß eine kleine Toleranz T automatisch zu einer größeren Schwankungsbreite der Phasenlage führt, so daß die kleinste Toleranz durch eine maximal zulässige Schwankungsbreite der Phasenlage sich festlegen läßt.

Hierbei wird jeweils die Phase des Unwuchtsignals gemessen und die Schwankungsbreite der Phasenlage ermittelt. Sobald diese Schwankungsbreite einen bestimmten Wert, insbesondere 0,5° bis 10°, z. B. aufgrund größerer Störungen, überschreitet, wird aus dem dann vorhandenen Unwuchtmeßsignal der entsprechende Störanteil N ermittelt und zur Neufestlegung der Toleranz mit dem in Abhängigkeit von zulässigen Schwankungen des Unwuchtmeßsignals bestimmten Multiplikator TM gemäß der vorstehenden Gleichung multipliziert.

Die Durchführung des vorstehenden Verfahrens zur Ermittlung der geeigneten Toleranzgröße für zulässige Unwuchtmeßsignalschwankungen empfiehlt sich jeweils vor Beginn eines Ausgleichsvorgangs, damit ein Überregelverhalten während des Ausgleichsvorgangs vermieden wird. Wenn die Unwuchtmeßsignalschwankungen innerhalb des Toleranzbereiches liegen, werden keine Ausgleichsvorgänge mehr eingeleitet bzw. wird der jeweilige Ausgleichsvorgang beendet.

## Patentansprüche

1. Verfahren zum fortlaufenden Ausgleich einer Unwucht eines Rotors, insbesondere einer Schleifscheibe, bei dem in Abhängigkeit von Unwuchtmeßsignalen, die von einem Meßwertgeber aus ermittelten Unwuchtwerten abgegeben werden, in mit dem Rotor als Rotationseinheit umlaufende, in unterschiedlichen Rotorwinkellagen angeordnete Ausgleichskammern eine Ausgleichsflüssigkeit in aufeinanderfolgenden Ausgleichsvorgängen während des Rotorumlaufs eingebracht wird, *dadurch gekennzeichnet, daß* der Störanteil, welcher im vom Meßwertgeber kommenden Unwuchtmeßsignal vorhanden ist, ermittelt wird und daß die Toleranz für noch zulässige Schwankungen der Unwuchtmeßsignale bzw. das Abschalten des jeweiligen Ausgleichsvorgangs durch Multiplikation eines den Störanteil angebenden Störfaktors mit einem in Abhängigkeit von zulässigen Schwankungen des Unwuchtmeßsignals bestimmten Multiplikator bestimmt wird.

2. Verfahren nach Anspruch 1, *dadurch gekennzeichnet, daß* aus während eines bestimmten Zeitraums gemessenen Unwuchtwerten der Maximal- und Minimalwert des Störsignale enthaltenden Unwuchtmeßsignals ermittelt werden und daß der Störfaktor aus der Differenz von Maximal- und Minimalwert gebildet wird.

3. Verfahren nach Anspruch 2, *dadurch gekennzeichnet, daß* der Maximal- und Minimalwert des Unwuchtmeßsignals innerhalb von weniger als 5 Sekunden ermittelt werden.

4. Verfahren nach Anspruch 1, *dadurch gekennzeichnet, daß* das von den Meßwertgebern kommende Störsignale enthaltende Unwuchtmeßsignal in bekannter Weise durch phasenabhängige Gleichrichtung bei gleichzeitiger Unterdrückung der Störsignale ausgewertet wird und daß aus dem Vergleich der Werte des Unwuchtmeßsignals vor und nach der phasenabhängigen Gleichrichtung der Störfaktor bestimmt wird.

5. Verfahren nach einem der Ansprüche 1 bis 4, *dadurch gekennzeichnet, daß* die Schwankungsbreite der Phasenlage des Unwuchtmeßsignals ermittelt und bei Überschreitung einer bestimmten, die kleinste Toleranz festlegende Schwankungsbreite der dann vorliegende Störfaktor mit dem Multiplikator zur neuen Festlegung der Toleranz multipliziert wird.

6. Verfahren nach Anspruch 5, *dadurch gekennzeichnet, daß* als bestimmte Schwankungsbreite der Phasenlage 0,5° bis 10° gewählt wird.

7. Verfahren nach einem der Ansprüche 1 bis 5, *dadurch gekennzeichnet, daß* ein Multiplikator größer als 1 verwendet wird.

8. Schaltungsanordnung zur Durchführung des Verfahrens nach Anspruch 4 mit einer zwischen einem Meßwertaufnehmer und einer Unwuchtspeicher- und/oder Anzeigeeinrichtung geschalteten phasenempfindlichen Gleichrichtereinrichtung, *dadurch gekennzeichnet, daß* an eine Stelle zwischen dem Meßwertgeber und dem Eingang der phasenempfindlichen Gleichrichtereinrichtung (2) und an deren Ausgang Eingänge eines Vergleichers (3) angeschlossen sind, in welchem der
Eingangs- und Ausgangswert des Unwuchtmeßsignals verglichen werden, und daß an den
Ausgang des Vergleichers (3) ein die Ausgleichseinrichtung ansteuernder Multiplikator (4),
welcher das Ausgangssignal des Vergleichers (3)
mit einem in Abhängigkeit von zulässigen
Schwankungen des Unwuchtmeßsignals bestimmten Multiplikator multipliziert, angeschlossen ist.

## Claims

1. A process for continuously compensating for
an unbalance of a rotor, in particular a grinding
disc, in which a compensating fluid is introduced
in successive compensating operations during
the rotary movement of the rotor into compensating chambers which rotate with the rotor as a
rotational unit and which are arranged at different
angular positions on the rotor, in dependence on
unbalance measurement signals which are produced by a measurement value generator from
detected unbalance values, *characterised in that*
the interference component which is present in
the unbalance measurement signal coming from
the measurement value generator is determined
and that the tolerance for fluctuations which are
still admissible in the unbalance measurement
signals or termination of the respective compensating operation is determined by multiplication of
an interference factor indicating the interference
component with a multiplier which is determined
in dependence on admissible fluctuations in the
unbalance measurement signal.

2. A process according to claim 1 *characterised
in that* the maximum and minimum values of the
unbalance measurement signal including interference signals are determined from unbalance
values which are measured during a given period
of time and that the interference factor is formed
from the difference between the maximum and
minimum values.

3. A process according to claim 2 *characterised
in that* the maximum and minimum values of the
unbalance measuring signal are determined
within less than 5 seconds.

4. A process according to claim 1 *characterised
in that* the unbalance measurement signal including interference signals and coming from the
measurement value generators is evaluated in
known manner by phase-dependent rectification
with simultaneous suppression of the interference
signals and that the interference factor is determined from comparison of the values of the unbalance measurement signal prior to and after the
phase-dependent rectification step.

5. A process according to one of claims 1 to 4
*characterised in that* the range of variations in the
phase position of the unbalance measurement
signal is determined and, when a given range of
fluctuation which establishes the smallest tolerance is exceeded, the interference factor which
occurs in that situation is multiplied by the multiplier for re-establishing the tolerance.

6. A process according to claim 5 *characterised
in that* the phase position 0.5° to 10° is selected
as the given range of fluctuation.

7. A process according to one of claims 1 to 5
characterised in that a multiplier of greater than 1
is used.

8. A circuit arrangement for carrying out the
process according to claim 4 comprising a phase-
sensitive rectifier means connected between a
measurement value pick-up and an unbalance
storage and/or display means, *characterised in
that* connected to a position between the measurement value generator and the input of the
phase-sensitive rectifier means (2) and to the
output of the rectifier means are inputs of a comparator (3) in which the input and output values of
the unbalance measurement signal are compered
and that connected to the output of the comparator (3) is a multiplier (4) for controlling the compensating means, the multiplier multiplying the
output signal of the comparator (3) by a multiplier
which is determined in dependence on admissible fluctuations in the unbalance measurement
signal.

## Revendications

1. Procédé pour compenser de façon permanente le balourd d'un rotor, notamment d'une meule,
selon lequel, en fonction de signaux de mesure
du balourd délivrés par un capteur de mesure à
partir de valeurs du balourd déterminées, un
liquide d'équilibrage est introduit, au cours d'opérations successives d'équilibrage pendant la rotation du rotor, dans des chambres d'équilibrage
tournant conjointement avec le rotor sous la
forme d'un ensemble unitaire en rotation, et disposées suivant des positions angulaires différentes du rotor, *caractérisé* par le fait qu'on détermine la composante parasite, qui est présente dans
le signal de mesure du balourd délivré par le
capteur de mesure, et qu'on détermine la tolérance pour des variations encore admissibles des
signaux de mesure du balourd ou l'interruption de
l'opération d'équilibrage considérée, par multiplication d'un facteur perturbateur, indiquant la composante parasite, par un multiplicateur déterminé
en fonction de variations admissibles du signal de
mesure du balourd.

2. Procédé suivant la revendication 1, *caractérisé* par le fait qu'on détermine la valeur maximale
et la valeur minimale du signal de mesure du
balourd contenant des signaux parasites, à partir
de valeurs du balourd mesurées pendant un intervalle de temps déterminé, et qu'on forme le facteur perturbateur à partir de la différence entre la valeur maximale et la valeur minimale.

3. Procédé suivant la revendication 2, *caractérisé* par le fait qu'on détermine la valeur maximale et la valeur minimale du signal de mesure du balourd pendant un intervalle de temps inférieur à 5 secondes.

4. Procédé suivant la revendication 1, *caractérisé* par le fait qu'on évalue de façon connue le signal de mesure du balourd contenant des signaux parasites délivrés par les capteurs de mesure, au moyen d'un redressement, qui est fonction de la phase, moyennant une suppression simultanée des signaux parasites et qu'on détermine le facteur perturbateur à partir de la comparaison des valeurs du signal de mesure du balourd avant et après le redressement, qui est fonction de la phase.

5. Procédé suivant l'une des revendications 1 à 4, *caractérisé* par le fait qu'on détermine la largeur de variation de la position de phase du signal de mesure du balourd et que dans le cas du dépassement d'une largeur de variation donnée, qui fixe la tolérance la plus faible, on multiplie le facteur perturbateur obtenu par le coefficient multiplicateur pour la nouvelle détermination de la tolérance.

6. Procédé suivant la revendication 5, *caractérisé* par le fait qu'on choisit la position de phase comprise entre 0,5° et 10° comme largeur déterminée de variation.

7. Procédé suivant l'une des revendications 1 à 5, *caractérisé* par le fait qu'on utilise un multiplicateur supérieur à 1.

8. Montage pour la mise en oeuvre du procédé suivant la revendication 4, comportant un dispositif redresseur sensible à la phase, branché entre un capteur de mesure et un dispositif de mémorisation et/ou d'affichage du balourd, *caractérisé* par le fait qu'en un emplacement situé entre le capteur de mesure et l'entrée du dispositif redresseur (2) sensible à la phase et à la sortie de ce dispositif sont raccordées des entrées d'un comparateur (3), dans lequel la valeur d'entrée et la valeur de sortie du signal de mesure du balourd sont comparées, et qu'à la sortie du comparateur (3) est raccordé un multiplicateur (4), qui commande le dispositif d'équilibrage et multiplie le signal de sortie du comparateur (3) par un coefficient multiplicateur déterminé en fonction de variations admissibles du signal de mesure du balourd.

**EP 0 195 845 B1**

# FIG.1

Block 1: US max = +Unendlich / US min := -Unendlich

Block 2: Messung der Unwuchtgröße U

Block 3: U > US max → Ja → Block 4: USmax := U

Block 5: U < US min → Ja → Block 6: USmin := U

Block 7: Messzeit abgelaufen → Ja

Block 8: Toleranzberechnung

# FIG.2

vom Meß-wert-geber → Block 1: Breitband-filter → Block 2: phasenempfindliche Gleichrichtung → Anzeige Unwuchtgröße Unwuchtwinkel

Block 3: Vergleich

Block 4: Toleranz → Ausgleichsvorgang